(19) Europäisches Patentamt
European Patent Office
Office européen des brevets

(11) **EP 2 154 200 A1**

(12) **EUROPEAN PATENT APPLICATION**
published in accordance with Art. 153(4) EPC

(43) Date of publication:
**17.02.2010 Bulletin 2010/07**

(51) Int Cl.:
**C08L 71/12** (2006.01)    **C08L 9/06** (2006.01)
**C08L 25/04** (2006.01)    **F16L 9/12** (2006.01)

(21) Application number: **08764816.8**

(22) Date of filing: **22.05.2008**

(86) International application number:
**PCT/JP2008/059847**

(87) International publication number:
**WO 2008/146862 (04.12.2008 Gazette 2008/49)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **28.05.2007 JP 2007140644**

(71) Applicant: **Asahi Organic Chemicals Industry Co.,
Ltd.
Nobeoka-city
Miyazaki 882-8688 (JP)**

(72) Inventors:
• **KOUROGI, Hidehiro
Nobeoka-shi
Miyazaki 882-8688 (JP)**
• **INOUE, Takanori
Nobeoka-shi
Miyazaki 882-8688 (JP)**

(74) Representative: **Weller, Erich W.
Patentanwälte Ruff, Wilhelm,
Beier, Dauster & Partner
Kronenstrasse 30
70174 Stuttgart (DE)**

(54) **PIPING MEMBER**

(57)    The present invention relates to a piping member molded from a resin composition comprising 50 to 120 parts by mass of a polystyrene-based resin relative to 100 parts by mass of a polyphenylene ether-based resin as essential components, and having a melt flow rate after kneading of 1.0 to 5.0 g/10 min. The present invention also relates to a piping member which has individual characteristics of a mold shrinkage factor from 0.5 to 0.8%, a time to breakage of 1,000 hours or more in a high-temperature creep characteristics test when molding is carried out in an atmosphere at 95°C under an applied tensile load of 5.0 MPa, and a moisture content of the kneaded resin composition before molding of less than 250 ppm, and in which is further blended a styrene·butadiene-based rubber having a styrene content of 10 to 40% and a weight average molecular weight of 200,000 or more in an amount of 1 to 15 parts by mass relative to 100 parts by mass of the polyphenylene ether-based resin.

Printed by Jouve, 75001 PARIS (FR)

**Description**

TECHNICAL FIELD

The present invention relates to a piping member molded using a polyphenylene ether-based resin composition, and particularly to a piping member such as a pipe produced by extrusion molding, or a joint or flange produced by injection molding, extrusion molding, vacuum and air-pressure molding or the like.

BACKGROUND ART

Polyphenylene ether-based resin compositions have excellent characteristics such as rigidity, heat resistance, chemical resistance and the like, and are used for industrial products, for example, OA equipment, electric and electronic components, housings, and automobile components (e.g., wheel caps, fenders, etc.).

Polyphenylene ether-based resin compositions also have resistance to acid and alkali in a high temperature range (60 to 95°C) and are comparatively inexpensive among general-purpose engineering plastics, and are therefore suited for a piping member for high temperature, through which a high-temperature chemical solution flows, in the industrial field. In such a piping member for high temperature, a conventional metal tube tends to be replaced by a resin tube, and the spread of polyphenylene ether-based resin compositions in future is expected very much, since such are included as a candidate thereof.

As a conventional piping member made of a polyphenylene ether-based resin composition, there is a heat-resistant water distribution piping composed of a polyphenylene ether-based resin composition containing a polyphenylene ether-based resin and a polystyrene-based resin (refer to Patent Document 1). Among these, the polystyrene-based resin is at least one kind selected from the group consisting of homopolystyrene, high-impact polystyrene modified with a rubber component (impact-resistant polystyrene) and polystyrene having a syndiotactic structure. It can be used as a substitute for a water distribution piping made of a vinyl chloride resin which has conventionally been used, and also can be used for applications requiring heat resistance where the water distribution piping made of a vinyl chloride resin could have not been used.

As the other conventional piping member made of a polyphenylene ether-based resin composition, there is a resin tube obtained from a resin composition for piping, comprising 70 to 99 parts by weight of a resin component (A) composed of a combination of a polyphenylene ether-based resin and a styrene-based resin, 1 to 30 parts by weight of a hydrogenated block copolymer (B) having a polymer block composed mainly of a vinyl aromatic hydrocarbon and a polymer block composed mainly of a conjugated diene compound, and 0.5 to 10 parts by weight of a plasticizer (C) (refer to Patent Document 2). This improves impact resistance and is excellent in chemical resistance, mold-releasability and heat resistance, and also has flame retardancy.

Patent Document 1: Japanese Unexamined Patent Publication (Kokai) No. 2003-74754
Patent Document 2: Japanese Unexamined Patent Publication (Kokai) No. 2005-239784

DISCLOSURE OF THE INVENTION

However, there is no description about melt flow rate (hereinafter referred to as MFR) in the above conventional heat-resistant water distribution piping (Patent Document 1) and, in this prior art document, no interest is shown towards MFR of a resin composition for molding a drainage piping. However, there is a problem in that a too small value of MFR causes deterioration of fluidity of the resin, thus making it impossible to mold a piping member. There is also a problem in that a too large value of MFR enables satisfactory fluidity of the resin, but causes a decrease in the molecular weight, resulting in deterioration of high-temperature characteristics and chemical resistance. Furthermore, when the value of MFR slightly exceeds a preferable range in extrusion molding of a pipe, the pipe can be molded, but thickness deviation is caused by the effect of gravity because of excess fluidity, and warping occurs in the pipe, thus making it impossible to obtain a satisfactory pipe. There is also a problem in that, when the value of MFR deviates considerably from a preferable range, draw down occurs, thus making it impossible to produce a pipe. Therefore, in the applications of such a piping member where an internal pressure is applied as a result of direct liquid contact, a piping member cannot be obtained according to the formulation of a resin composition in a conventional heat-resistant water distribution piping, or the obtained piping member does not sufficiently satisfy requisite performance requirements.

As the conventional resin tube (Patent Document 2), those having an MFR of 18 to 54 are disclosed in the Examples. However, since the value of MFR is too large in such a range, when the tube is used for a piping line in which a chemical solution is allowed to flow in a fluid, the tube lacks long-term strength because of low high-temperature creep characteristics, and thus stress cracking is likely be caused by the chemical solution. When a piping member (especially a pipe) has a large diameter (50 mm or more), no problem arises as the value of MFR increases in the case of a small diameter. However, as the diameter increases, thickness deviation occurs upon extrusion molding of the pipe and warping occurs in the pipe, and thus it becomes difficult to obtain a satisfactory molded article. When the value of MFR increases excessively, draw down occurs and thus it becomes impossible to conduct extrusion molding of a pipe.

Common to the above heat-resistant water distribution piping and resin tube, they can be used as a substitute for a water distribution piping made of a vinyl chloride resin. However, the mold shrinkage factor of polyphenylene ether-based resin compositions varies largely, depending on the blending ratio of the polyphenylene ether-based resin and the polystyrene-based resin. Therefore, when existing facilities for the production of water distribution piping made of a vinyl chloride resin are utilized for the polyphenylene ether-based resin composition, the dimensions of the molded article vary even in the case of molding using the same mold if the mold shrinkage factor is different from that of the vinyl chloride resin, and thus the facilities for the vinyl chloride resin cannot be utilized as they are. Therefore, new facilities (especially mold) are required in the case of molding the polyphenylene ether-based resin composition and enormous facilities are required for line up of products, resulting in large installation space and high cost for the facilities.

Common to the above heat-resistant water distribution piping and resin tube, if a resin composition is not sufficiently dried in the case of molding thick-wall products, appearance defects such as silver streaks, bubbles and the like are likely to be formed on the surface of a molded article. In general, the appearance defect rate of the molded article increases in a piping member which often requires a thick-wall (having a wall thickness of 5 mm or more) product.

The present invention has been made so as to overcome drawbacks of the above conventional polyphenylene ether-based resin composition, thereby providing a piping member which has excellent high-temperature characteristics and rigidity in a high temperature range (60 to 95°C) and can use the same facilities as those used in the production of a vinyl chloride resin, and also has satisfactory moldability and appearance.

The present inventors have carried out intensive studies so as to develop a polyphenylene ether-based resin composition having preferable properties as described above and found that the above object can be achieved by using a polyphenylene ether-based resin and a polystyrene-based resin in a specific ratio as essential components to obtain a resin composition having a specific MFR after kneading, and thus have achieved the present invention.

A first feature of the present invention is characterized by molding from a resin composition comprising 100 parts by mass of a polyphenylene ether-based resin and 50 to 120 parts by mass of a polystyrene-based resin as essential components, and having a melt flow rate after kneading of 1.0 to 5.0 g/10 min. A second feature is that the mold shrinkage factor is from 0.5 to 0.8%. A third feature is that the time to breakage is 1,000 hours or more in high-temperature creep characteristics of the obtained molding in an atmosphere at 95°C under an applied tensile load of 5.0 MPa. A fourth feature is that the moisture content of the kneaded resin composition before molding is less than 250 ppm. A fifth feature is characterized by further blending with a styrene·butadiene-based rubber having a styrene content of 10 to 40% and a weight average molecular weight of 200,000 or more in an amount of 1 to 15 parts by mass relative to 100 parts by mass of the polyphenylene ether-based resin. A sixth feature is that the piping member is a tube or a joint, and an outer diameter D and the wall thickness t of the tube or the joint satisfy the following relationships: 1) D > 48 mm, and 2) $(1/35)D < t < (1/9)D$.

DETAILED DESCRIPTION OF THE INVENTION

Since the polyphenylene ether-based resin has high mechanical strength and elastic modulus but has poor fluidity, the polyphenylene ether-based resin cannot be molded alone. Therefore, it is necessary to blend other reins so as to mold the polyphenylene ether-based resin. Examples of the resin used for blending include a polystyrene-based resin, a polyamide-based resin, a polypropylene-based resin and the like. However, a polystyrene-based resin is necessary, since it has well-balanced characteristics (high-temperature creep characteristics, mold shrinkage factor, chemical resistance, cost, etc.) required for a piping member.

When a piping member made of the polyphenylene ether-based resin composition is used for a piping member for high temperature, the required characteristic is a degree of strength which makes it possible to use the piping member over a long period even when a high-temperature fluid is allowed to flow in a state where an internal pressure is applied. For example, when the SDR (outer diameter/wall thickness) is 11, high-temperature creep characteristics are required which are equivalent to or higher than the strength resistant to breakage for 10 years when a pressure of 0.4 MPa is applied.

In the present invention, it is necessary for the blending ratio of the polyphenylene ether-based resin to the polystyrene-based resin to be adjusted to a range capable of satisfying characteristics required for the above piping member for high temperature, and for the amount of the polystyrene-based resin to be from 50 to 120 parts by mass relative to 100 parts by mass of the polyphenylene ether-based resin. The amount of the polystyrene-based resin is preferably 50 parts by mass or more so as to improve the impact strength and moldability by improving fluidity, and the amount of the polystyrene-based resin is preferably 120 parts by mass or less so as to impart satisfactory high-temperature creep characteristics and to suppress a decrease in mechanical strength, and to maintain heat resistance. When the amount of the polystyrene-based resin is from 50 to 120 parts by mass relative to 100 parts by mass of the polyphenylene ether-based resin, the mold shrinkage factor of the polyphenylene ether-based resin composition becomes close to that of a vinyl chloride resin, and thus it is preferred so as to obtain the mold shrinkage factor identical to that of the vinyl chloride resin. The polyphenylene ether-based resin composition can be used after blending it with a polystyrene-based resin, or both can be graft-copolymerized. Satisfactory processability and long-term physical properties can be obtained by graft copolymerization, and high-temperature characteristics are particularly improved.

In the present invention, it is necessary for the MFR of the polyphenylene ether-based resin composition to be from 1.0 to 5.0 g/10 min. The MFR is preferably 1.0 g/10 min or more so as to impart fluidity required for molding of the resin composition and to obtain satisfactory productivity for molding a thick-wall piping member. The MFR is preferably 5.0 g/10 min or less so as to suppress warping due to thickness deviation of a pipe in pipe molding and draw down of a resin composition, thereby obtaining satisfactory high-temperature characteristics. The MFR of the polyphenylene ether-based resin composition is measured under the conditions of a test temperature of 250°C and a test load of 10 kg in accordance with JIS K7210.

In the present invention, the mold shrinkage factor of the polyphenylene ether-based resin composition is preferably from 0.5 to 0.8%. More specifically, the mold shrinkage factor in a flow direction of a molded article having a wall thickness of 10 mm is more preferably from 0.6 to 0.8%, and the mold shrinkage factor in a vertical direction is more preferably 0.5 to 0.7%. The mold shrinkage factor of the resin composition varies depending on the kind of the resin and the difference in the amount of the resin. In the case of a polyphenylene ether-based resin composition having a mold shrinkage factor of 0.5 to 0.8%, the mold shrinkage factor is almost the same as that of the vinyl chloride resin used for the piping member. For example, when injection molding of the polyphenylene ether-based resin composition is conducted using a mold for a piping member made of a vinyl chloride resin, it is possible to obtain a piping member having almost the same dimensions as that of the piping member molded using the vinyl chloride resin. Therefore, the same production facilities as for a conventional vinyl chloride resin can be used in common, and thus it is not necessary to prepare further production facilities for a polyphenylene ether-based resin composition required for a line up of products. As a result, excessive costs are not incurred and new installation space for production facilities is not required.

From the relationship of the temperature, the tensile load and the retention time in a high-temperature creep test, the retention time of the piping member, when a tensile load varies at the same temperature, can be converted relative to Naday's Equation and a circumferential stress-time specified graph in conformity with DIN8078. Application of a tensile load can be considered as application of a pipe internal pressure in a piping member (pipe), and the pipe internal pressure corresponding to the tensile load varies with pipe wall thickness and pipe outer diameter, and is calculated by Naday's Equation 1. The test stress in Equation 1 corresponds to the tensile load.

$$\text{Pipe internal pressure} = (2 \times \text{Pipe wall thickness test stress})/(\text{Pipe outer diameter} - \text{Pipe wall thickness})$$

$$\text{Equation 1}$$

Regarding the piping member of the present invention, in high-temperature creep characteristics in an atmosphere at 95°C under an applied tensile load of 5.0 MPa, the time to breakage is preferably 1,000 hours or more, for the following reason. In the case of a pipe having a pipe wall thickness of 6.0 mm and a pipe outer diameter of 63 mm, the tensile load 5.0 MPa corresponds to a pipe internal pressure of 1.0 MPa by Equation 1, and thus the piping member is retained in an atmosphere at 95°C under a pipe internal pressure of 1.0 MPa for 1,000 hours or more. When the retention time is 10 years in an atmosphere at 95°C, the internal pressure becomes 0.6 MPa by conversion relative to Naday's Equation and a circumferential stress-time specified graph in conformity with DIN8078, and therefore the pipe has a lifetime of 10 years in an atmosphere at 95°C under a pipe internal pressure of 0.6 MPa. In contrast, in the case of a piping member made of a general polypropylene-based resin composition as the other material used as a piping member for high temperature, when a pipe internal pressure of 1.0 MPa is similarly applied in an atmosphere at 95°C, a pipe having a pipe wall thickness of 6.0 mm and a pipe outer diameter of 63 mm breaks after about 10 hours. Therefore, it is necessary to decrease to a pipe internal pressure of 0.7 MPa in an atmosphere at 95°C so that the pipe does not break for at least 1,000 hours or more. In the case of conversion so as to control the retention time to 10 years in an atmosphere at 95°C, the internal pressure becomes 0.4 MPa. Therefore, the permissable pressure of the piping member made of a polyphenylene ether-based resin composition increases by 1.5 times that of the piping member made of a polypropylene-based resin composition, and thus the piping member can be used for applications at higher pressure. In applications at high temperature and high pressure, the amount of the polystyrene-based resin among the polyphenylene ether-based resin composition of the present invention is from 50 to 105 parts by mass relative to 100 parts by mass of the polyphenylene ether-based resin, and the MFR after kneading is more preferably from 1.5 to 4.5 g/10 min.

When the piping member is used at a temperature of 95°C or higher, for example, 100°C, since the temperature is close to the softening temperature of the polypropylene-based resin composition, the resin composition is softened in an atmosphere at 100°C, and the piping member cannot retain sufficient strength. In contrast, the polyphenylene ether-based resin composition is not softened and therefore can be used without any problem, although there is a restriction in that the working pressure is decreased by conversion of the temperature, tensile load and retention time (in the case of a pipe having a wall thickness of 6.0 mm and an outer diameter 63 mm, the internal pressure becomes 0.2 MPa so as to adjust the retention time to 10 years in an atmosphere at 100°C). In other words, the piping member has chemical resistance which cannot be achieved by other existing piping members made of a resin composition, and can be used at about 100°C, including a high temperature range (60 to 95°C), and is also best suited for use as a piping member in applications at higher temperatures than in the case of a piping member made of a polypropylene-based resin composition.

Furthermore, the moisture content before molding of the polyphenylene ether-based resin composition of the present invention is preferably less than 250 ppm (100 ppm = 0.01%) so as not to generate appearance defects (silver streaks, etc.) and bubbles inside, and ideally is 0 ppm. In the case of a thick-wall molded article (for example, a pipe having a diameter of 50 mm or more and a wall thickness of 5 mm or more), since appearance defects and bubbles are likely to be generated depending on the moisture content, control of the moisture content is preferred so as to reduce the number of defective pipes. In order to adjust the moisture content to less than 250 ppm, the drying temperature of the polyphenylene ether-based resin composition is from 100 to 110°C for about 10 hours in the case of a thick-wall molded article, or 90 to 100°C for about 2.4 hours as the drying time.

In the polyphenylene ether-based resin composition of the present invention, the polyphenylene ether-based resin composition can contain other polymers, as long as the characteristics required for a piping member are within a permissible range. Other polymers are not particularly limited, as long as the characteristics required for a piping member do not deteriorate, and a styrene·butadiene-based rubber is particularly preferred. Impact strength can be improved while maintaining high-temperature creep characteristics by blending styrene·butadiene-based rubber.

The amount of the styrene·butadiene-based rubber is preferably from 1 to 15 parts by mass relative to 100 parts by mass of the polyphenylene ether-based resin. The amount is preferably 1 part by mass or more so as to obtain satisfactory high-temperature creep characteristics and impact strength. The amount is preferably 15 parts by mass or less so as to obtain satisfactory heat resistance and rigidity. The total amount of other polymers is preferably from 1 to 15 parts by mass relative to 100 parts by mass of the polyphenylene ether-based resin.

The styrene content of the styrene·butadiene-based rubber is preferably from 10 to 40%, and more preferably from 15 to 35%. When the styrene content of the styrene·butadiene-based rubber is too small, physical properties vary slightly. In contrast, when the styrene content is too small, the elastic modulus and mechanical strength decrease. However, the moldability of the piping member improves, since its fluidity is improved. Therefore, the styrene content is preferably 10% or more so as to ensure satisfactory high-temperature creep characteristics and impact strength required for a piping member with good balance. The styrene content is preferably 40% or less so as to obtain satisfactory compatibility and to ensure satisfactory high-temperature creep characteristics and impact strength with good balance.

The weight average molecular weight of the styrene·butadiene-based rubber of the present invention is preferably 200,000 or more. When the polyphenylene ether-based resin composition is blended with a styrene·butadiene-based rubber having a weight average molecular weight of 200,000 or less, impact strength is improved but high-temperature characteristics deteriorate. Therefore, it is not suited for use as a piping member for high temperature, and thus the weight average molecular weight is preferably 200,000 or more so as to obtain satisfactory high-temperature characteristics and impact strength. When the weight average molecular weight of the styrene·butadiene-based rubber is further increased, high-temperature creep characteristics are improved, and therefore the upper limit of the weight average molecular weight is not particularly limited. In order to prevent the production of a styrene·butadiene-based rubber from becoming hard by increasing the weight average molecular weight, the weight average molecular weight is practically about several millions, and specifically preferably from 200,000 to 3,000,000. It is preferred that the MFR of the polyphenylene ether-based resin, the polystyrene-based resin and the styrene·butadiene-based rubber after kneading not vary or decrease compared with the MFR before kneading. In order to prevent an increase in the MFR after kneading, since the MFR after kneading can be decreased when the styrene·butadiene-based rubber has too high a molecular weight to measure the MFR (refer to Example 5 and Example 6 in Table 1, due to a difference in the molecular weight of the styrene·butadiene-based rubber, the MFR after kneading in the case of the molecular weight of 230,000 in Example 5 decreases compared with MFR after kneading in the case of the molecular weight 100,000 in Example 6), it is necessary for the weight average molecular weight to be 200,000 or more so as to increase the styrene·butadiene-based rubber to a molecular weight too high to measure the MFR.

As the polymerization method and the polymerization catalyst of the styrene·butadiene-based rubber of the present invention, any method and any catalyst can be used. In view of chemical resistance and weatherability when the styrene·butadiene-based rubber is blended with the polyphenylene ether-based resin composition, the hydrogenation degree is preferably close to 100%. In view of weatherability, heat resistance and chemical resistance, the specific hydrogenation degree is preferably 85% or more, more preferably 90% or more, and still more preferably 95% or more.

When the piping member of the present invention is a tube or a joint, the wall thickness exerts less influence in the case of a small diameter. In the case of a large diameter (diameter of 50 mm or more), the relationship between the outer diameter and the wall thickness of the tube exerts an influence on heat resistance and high-temperature creep characteristics. In order to exhibit heat-resistant superiority over existing resin tubes (vinyl chloride resin, polyethylene, polypropylene, etc.), a wall thickness is required which is suited to ensure endurance over a long period even in a state where an internal pressure is applied on a piping member having a large diameter at a high temperature of 90°C or higher. When an outer diameter D of the tube is more than 48 mm (the minimum size taking account of a dimensional range of a tube assuming a diameter of 50 mm or more), the wall thickness preferably satisfies the following relation: 1/35D < t < 1/9D. The wall thickness must be more than 1/35D so as to retain a pressure-resistant strength necessary (sufficient) to enable a piping member to be used as required, and must be less than 1/9D so as to prevent the tube being of excess weight by decreasing the amount of the resin composition used. More specifically, the preferable range of wall thickness varies with the outer diameter D of the tube. When D satisfies the following relation: 48 mm < D < 100 mm, t more preferably satisfies the following relation: 1/17D < t < 1/9D. When D satisfies the following relation: 100 mm < D < 250 mm, t more preferably satisfies the following relation: 1/20D < t < 1/15D. When D satisfies the following relation: D > 250 mm, t more preferably satisfies the following relation: 1/35D < t < 1/18D.

As the polyphenylene ether-based resin of the present invention, any known polyphenylene ether-based resin can be used without any particular limitation and may be either a homopolymer or a copolymer, and examples thereof include  poly(2,6-dimethyl-1,4-phenylene)ether,  poly(2-methyl-6-ethyl-1,4-phenylene)ether,  poly(2,6-diethyl-1,4-phenylene)ether, poly(2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl-6-isopropyl-1,4-phenylene)ether, poly(2-methyl-6-chloroethyl-1,4-phenylene) ether,  poly(2-methyl-6-hydroxyethyl-1,4-phenylene)ether,  poly(2-methyl-6-chloroethyl-1,4-phenylene)ether,  poly(2,6-dimethoxy-1,4-phenylene)ether, poly(2,6-dichloromethyl-1,4-phenylene)ether, poly(2,6-dibromomethyl-1,4-phenylene) ether,  poly(2,6-diphenyl-1,4-phenylene)ether,  poly(2,6-ditolyl-1,4-phenylene)ether,  poly(2,6-dichloro-1,4-phenylene) ether, poly(2,6-dibenzyl-1,4-phenylene)ether, poly(2,5-dimethyl-1,4-phenylene)ether and the like.

As the polystyrene-based resin used for the polyphenylene ether-based resin composition of the present invention, a homopolymer of styrene and a styrene derivative, for example, polystyrene, rubber-modified polystyrene (high-impact polystyrene), syndiotactic polystyrene, etc. can be exemplified. Furthermore, a styrene-based copolymer, for example, a styreneacrylonitrile copolymer (an AS resin), a styrene acrylonitrile-butadiene copolymer (an ABS resin), etc. can be exemplified. Among these, a high-impact polystyrene is preferably used in view of satisfactory compatibility and improvement in impact strength.

If necessary, the polyphenylene ether-based resin composition of the present invention can be blended with antioxidants, ultraviolet absorbers, and stabilizers such as photostabilizers, and thus the thermostability and light resistance of the composition can be improved.

Examples of the antioxidants include hindered phenol-based antioxidants such as 2,6-di-t-butyl-4-methylphenol, n-octadecyl-3-(4'-hydroxy-3',5'-di-t-butylphenyl)propionate,  2,2'-methylenebis(4-methyl-6-t-butylphenol),  2,2'-methylenebis(4-ethyl-6-t-butylphenol), 2,4-bis{(octylthio)methyl)-0-cresol, 2-t-butyl-6-(3-t-butyl-2-hydroxy-5-methylbenzyl)-4-methylphenyl acrylate, 2,4-di-t-amyl-6-{1-(3,5-di-t-amyl-2-hydroxyphenyl)ethyl}phenyl acrylate, 2-1-(2-hydroxy-3,5-di-tert-pentylphenyl)]acrylate, etc.; sulfur-based antioxidants such as dilaurylthio dipropionate, lauryl stearyl thiodipropionate pentaerythritol-tetrakis($\beta$-laurylthiopropionate), etc.; and phosphorus-based antioxidants such as tris(nonylphenyl) phosphite, tris(2,4-di-t-butylphenyl)phosphate, etc.

Examples of the ultraviolet absorbers and photostabilizers include benzotriazole-based ultraviolet absorbers such as 2-(2'-hydroxy-5'-methylphenyl)benzotriazole, 2-(2'-hydroxy-3',5'-t-butylphenyl)benzotriazole, 2-(2'-hydroxy-3', 5'-di-t-butylphenyl-5-chlorobenzotriazole, etc.; benzophenone-based ultraviolet absorbers such as 2-hydroxy-4-methoxybenzophenone, etc.; and triazine-based ultraviolet absorbers or hindered amine-based photostabilizers.

If necessary (in order to improve the strength of the portion which is not contacted with a liquid), the polyphenylene ether-based resin composition of the present invention can be blended with inorganic fillers such as spherical fillers, tabular fillers, fibrous fillers and the like. These fillers can be used alone, or two or more kinds of them can be used in combination. Examples of the spherical fillers include calcium carbonate, barium sulfate, calcium sulfate, clay, perlite, Shirasu balloon, diatomaceous earth, fired alumina, calcium silicate and the like. Examples of the tabular fillers include talc, mica and the like. Examples of the fibrous fillers include glass fiber, carbon fiber, boron fiber, silicon carbide fiber, potassium titanate fiber, polyamide fiber, polyester fiber, polyallylate fiber, polyimide fiber and the like.

If necessary, the polyphenylene ether-based resin composition can be blended with flame retardants (halogen-based flame retardants such as chlorinated polyethylene, decabromodiphenyl ether, etc., phosphorus-based flame retardants such as tricresyl phosphate, etc., inorganic flame retardants such as aluminum hydroxide, etc.); lubricants (hydrocarbon-based lubricants such as liquid paraffin, etc., fatty acids such as stearic acid, etc., higher alcohol-based lubricants such as stearyl alcohol, etc., amide-based lubricants such as stearic acid amide, etc., metal soap lubricants such as calcium stearate, etc.); antistatic agents (polyalkylene glycol, sulfonic acid group-containing compounds, etc.); antibacterial agents (inorganic antibacterial agents (inorganic antibacterial agents such as zeolite, etc., organic antibacterial agents such as 2-(4-thiazolyl)benzoimidazole, etc.), coloring agents (inorganic coloring agents such as titanium oxide, etc., organic coloring agents such as carbon black, etc.) and the like. Since the amounts of them vary depending on the kind of additives, additives are preferably blended in amounts enough to exert the effect of the additives without deterioration of physical properties of the composition. After blending, the melt-kneading method is not particularly limited, and a polyphenylene ether-based resin composition containing each component dispersed therein can be obtained by using a single screw extruder, a twin screw extruder, a kneader or the like.

The piping member using the polyphenylene ether-based resin composition of the present invention particularly relates to a pipe and a joint, and the molding method is not particularly limited. Examples of the pipe and joint include pipes and multi-layered pipes produced by extrusion molding, and joints and flanges produced by injection molding, vacuum and air-pressure molding and the like.

BEST MODE FOR CARRYING OUT THE INVENTION

The following Examples further illustrate the present invention in detail, although the present invention is not limited to only these Examples.

EXAMPLES

With respect to the piping member made of a polyphenylene ether-based resin composition of the present invention, performance was evaluated by the procedures shown below. Examples of the evaluation include evaluation of mechanical physical properties of pipes produced by extrusion molding of polyphenylene ether-based resin compositions each having a different composition; evaluation of moldability and appearance of pipes produced by extrusion molding of polyphenylene ether-based resin compositions each having a different FMR and a different moisture content; and evaluation of the mold shrinkage factor of joints produced by injection molding of polyphenylene ether-based resin compositions each having a different blending ratio of the polyphenylene ether-based resin and the polystyrene-based resin.

(1) Measurement of MFR

In accordance with JIS K7210, the measurement was conducted under the conditions of a test temperature of 250°C and a test load of 10 kg.

(2) Notched Izod impact test

In accordance with JIS K7110, notched Izod impact test pieces were cut out from a pipe made of a polyphenylene ether-based resin composition and the Izod impact strength was measured in an atmosphere at $23\pm1°C$.

(3) High-temperature creep test

In accordance with DIN8078, at $95\pm1°C$, an internal pressure of 1.0 MPa (a pipe internal pressure corresponding to 5.0 MPa of a tensile load at a pipe thickness of 6.0 mm and an outer diameter of 63 mm was calculated by Naday's Equation 1) was applied to 1,000 mm of a pipe made of a polyphenylene ether-based resin composition, and then the time to breakage was measured.

```
Pipe internal pressure = (2 × Pipe wall thickness ×
  Test stress)/(Pipe outer diameter - Pipe wall thickness)
                                              Equation 1
```

(4) Mold shrinkage factor

Using an injection molding machine, cylindrical test pieces (vinyl chloride resin mold, basic dimensions: an outer diameter of 70 mm, a width (the length of the cylinder) of 133 mm, a wall thickness of 6 mm) were molded and allowed to stand in an atmosphere at 23°C for 2 days, and then the dimensional values of the outer diameter (2 points in a diameter direction) and the width (4 points on the outer periphery at the same interval) were measured. The measurement was conducted using 10 test pieces. Averages of the outer diameter and the width were calculated and each mold shrinkage factor was calculated from the averages of the outer diameter and the width by Equation 2. For comparison, a vinyl chloride resin was molded in the same manner and dimensions were measured, and then the mold shrinkage factor was calculated by Equation 2. Basic dimensions means target dimensions of a molded article, and means product dimensions. Regarding the mold for a vinyl chloride resin used in this test, a permissible dimensional deviation to the basic dimensions (when molded using a vinyl chloride resin) is adjusted within ±0.2 mm for the outer diameter, or adjusted within ±0.2 mm for the width. The outer diameter of these molds is 70.59 mm and the width is 133.81 mm (measured values). In this test, the mold shrinkage factor of the width is within a range from 0.5 to 0.8% (the shrinkage factor of the outer diameter becomes larger than a basic mold shrinkage factor, since the test piece is cylindrical and includes a space therein, and thus a comparison is made by the width) and is rated as "pass" when the permissible dimensional deviation of the basic dimensions is within ±0.2 mm for the outer diameter or within ±0.2 mm for the width.

```
Mold shrinkage factor = {(Mold dimension - Test
  piece dimension)/Mold dimension} × 100          Equation 2
```

(5) Measurement of moisture content

The measurement was conducted at a set temperature of 230°C by the Carl-Fischer method.

Example 1

100 parts by mass of the polyphenylene ether-based resin and 80 parts by mass of a high-impact polystyrene as a polystyrene-based resin were blended and the mixture was palletized by kneading using a twin screw extruder to produce a polyphenylene ether-based resin composition having an MFR of 3.62 after kneading. The obtained resin composition was dried (at 110°C for 24 hours), thereby decreasing the moisture content to less than 250 ppm. Using a single screw extruder, a pipe made of the polyphenylene ether-based resin composition having a wall thickness of 6.0 mm and an outer diameter of 63 mm was molded at a cylinder temperature of 250°C. Test pieces for various tests were made from the pipe, and then a notched Izod impact test and a high-temperature creep test were conducted. The results are shown in Table 1. Also, extrusion moldability upon pipe molding and appearance of the molded pipe were evaluated. The results are shown in Table 2. Further, the mold shrinkage factor of a joint produced by injection molding of the resin composition was measured. The results are shown in Table 3.

Example 2

100 parts by mass of a polyphenylene ether-based resin and 80 parts by mass of a high-impact polystyrene were blended and then palletized by kneading in the same manner as in Example 1 to produce a polyphenylene ether-based resin composition having an MFR of 1.57 after kneading. The obtained resin composition was dried, thereby decreasing the moisture content to less than 250 ppm. A pipe was molded and tests for evaluation of various physical properties were conducted. The results are shown in Table 1. Also, extrusion moldability and appearance were evaluated. The results are shown in Table 2.

Example 3

100 parts by mass of a polyphenylene ether-based resin and 60 parts by mass of a high-impact polystyrene were blended and then palletized by kneading in the same manner as in Example 1 to produce a polyphenylene ether-based resin composition having an MFR of 3.62 after kneading. The obtained resin composition was dried, thereby decreasing the moisture content to less than 250 ppm. A pipe was molded and tests for evaluation of various physical properties were conducted. The results are shown in Table 1. Also, the mold shrinkage factor was measured. The results are shown in Table 3.

Example 4

100 parts by mass of a polyphenylene ether-based resin and 110 parts by mass of a high-impact polystyrene were blended and then palletized by kneading in the same manner as in Example 1 to produce a polyphenylene ether-based resin composition having an MFR of 4.50 after kneading. The obtained resin composition was dried, thereby decreasing the moisture content to less than 250 ppm. A pipe was molded and tests for evaluation of various physical properties were conducted. The results are shown in Table 1. Also, extrusion moldability and appearance were evaluated. The results are shown in Table 2. Further, the mold shrinkage factor was measured. The results are shown in Table 3.

Example 5

100 parts by mass of a polyphenylene ether-based resin and 80 parts by mass of a high-impact polystyrene were blended and then palletized by kneading together with 13 parts by mass of a hydrogenated styrene·butadiene-based rubber (styrene content: 30%, weight average molecular weight: 230,000) in the same manner as in Example 1 to produce a polyphenylene ether-based resin composition having an MFR of 3.60 after kneading. The obtained resin composition was dried, thereby decreasing the moisture content to less than 250 ppm. A pipe was molded and tests for evaluation of various physical properties were conducted. The results are shown in Table 1.

Example 6

100 parts by mass of a polyphenylene ether-based resin and 80 parts by mass of a high-impact polystyrene were blended and then palletized by kneading together with 13 parts by mass of a hydrogenated styrene·butadiene-based rubber (styrene content: 30%, weight average molecular weight: 100,000) in the same manner as in Example 1 to produce a polyphenylene ether-based resin composition having an MFR of 4.23 after kneading. The obtained resin composition was dried, thereby decreasing the moisture content to less than 250 ppm. A pipe was molded and tests for evaluation of various physical properties were conducted. The results are shown in Table 1.

Example 7

100 parts by mass of a polyphenylene ether-based resin and 80 parts by mass of a high-impact polystyrene were blended and then palletized by kneading together with 13 parts by mass of a hydrogenated styrene·butadiene-based rubber (styrene content: 5%, weight average molecular weight: 230,000) in the same manner as in Example 1 to produce a polyphenylene ether-based resin composition having an MFR of 3.02 after kneading. The obtained resin composition was dried, thereby decreasing the moisture content to less than 250 ppm. A pipe was molded and tests for evaluation of various physical properties were conducted. The results are shown in Table 1.

Example 8

100 parts by mass of a polyphenylene ether-based resin and 80 parts by mass of a high-impact polystyrene were blended and then palletized by kneading together with 13 parts by mass of a hydrogenated styrene·butadiene-based rubber (styrene content: 50%, weight average molecular weight: 230,000) in the same manner as in Example 1 to produce a polyphenylene ether-based resin composition having an MFR of 4.15 after kneading. The obtained resin composition was dried, thereby decreasing the moisture content to less than 250 ppm. A pipe was molded and tests for evaluation of various physical properties were conducted. The results are shown in Table 1.

Example 9

100 parts by mass of a polyphenylene ether-based resin and 80 parts by mass of a high-impact polystyrene were blended and then palletized by kneading together with 18 parts by mass of a hydrogenated styrene·butadiene-based rubber (styrene content: 30%, weight average molecular weight: 230,000) in the same manner as in Example 1 to produce a polyphenylene ether-based resin composition having an MFR of 3.55 after kneading. The obtained resin composition was dried, thereby decreasing the moisture content to less than 250 ppm. A pipe was molded and tests for evaluation of various physical properties were conducted. The results are shown in Table 1.

Comparative Example 1

100 parts by mass of a polyphenylene ether-based resin and 80 parts by mass of a high-impact polystyrene were blended and then palletized by kneading in the same manner as in Example 1 to produce a polyphenylene ether-based resin composition having an MFR of 6.20 after kneading. The obtained resin composition was dried, thereby decreasing the moisture content to less than 250 ppm. A pipe was molded and tests for evaluation of various physical properties were conducted. The results are shown in Table 1. Also, extrusion moldability and appearance were evaluated. The results are shown in Table 2.

Comparative Example 2

100 parts by mass of a polyphenylene ether-based resin and 40 parts by mass of a high-impact polystyrene were blended and then palletized by kneading in the same manner as in Example 1 to produce a polyphenylene ether-based resin composition having an MFR of 2.92 after kneading. The obtained resin composition was dried, thereby decreasing the moisture content to less than 250 ppm. A pipe was molded and tests for evaluation of various physical properties were conducted. The results are shown in Table 1. Also, the mold shrinkage factor was measured. The results are shown in Table 3. Comparative Example 3

100 parts by mass of a polyphenylene ether-based resin and 130 parts by mass of a high-impact polystyrene were blended and then palletized by kneading in the same manner as in Example 1 to produce a polyphenylene ether-based resin composition having an MFR of 10.00 after kneading. The obtained resin composition was dried, thereby decreasing the moisture content to less than 250 ppm. A pipe was molded and tests for evaluation of various physical properties were conducted. The results are shown in Table 1. Also, extrusion moldability and appearance were evaluated. The results are shown in Table 2. Further, the mold shrinkage factor was measured. The results are shown in Table 3. Comparative Example 4

100 parts by mass of a polyphenylene ether-based resin and 10 parts by mass of a high-impact polystyrene were blended and then palletized by kneading in the same manner as in Example 1 to produce a polyphenylene ether-based resin composition having an MFR of 0.50 after kneading. The obtained resin composition was dried, thereby decreasing the moisture content to less than 200 ppm. However, fluidity was not obtained and thus a pipe could not be molded. The results of extrusion moldability are shown in Table 2.


Comparative Example 5


The same polyphenylene ether-based resin composition as in Example 1 was produced and then a pipe was molded without drying. The moisture content in the non-dried state was about 380 ppm. Extrusion moldability and appearance were evaluated. The results are shown in Table 2.


Table 1

| | | Example 1 | Example 2 | Example 3 | Example 4 | Example 5 | Example 6 |
|---|---|---|---|---|---|---|---|
| Formulation (parts by weight) | Polyphenylene ether-based resin | 100 | 100 | 100 | 100 | 100 | 100 |
| | Polystyrene-based resin (high-impact polystyrene) | 80 | 80 | 60 | 110 | 80 | 80 |
| | Styrene·butadiene-based rubber (molecular weight: 100,000, styrene content: 30%) | – | – | – | – | – | 13 |
| | Styrene·butadiene-based rubber (molecular weight: 230,000, styrene content: 5%) | – | – | – | – | – | – |
| | Styrene·butadiene-based rubber (molecular weight: 230,000, styrene content: 30%) | – | – | – | – | 13 | |
| | Styrene·butadiene-based rubber (molecular weight: 230,000, styrene content: 50%) | – | – | – | – | – | |
| MFR after kneading (g/10 min) | | 3.62 | 1.57 | 3.62 | 4.50 | 3.60 | 4.23 |
| Moisture content (ppm) | | 200 | 190 | 200 | 210 | 180 | 200 |
| Izod impact strength (kJ/m$^2$) | | 8 | 8 | 8 | 11 | 14 | 14 |
| High-temperature creep characteristics (hr) | | >1000 | >1000 | >1000 | 970 | >1000 | 600 |


Table 1 (Continued)

| | | Example 7 | Example 8 | Example 9 | Comparative Example 1 | Comparative Example 2 | Comparative Example 3 |
|---|---|---|---|---|---|---|---|
| Formulation (parts by weight) | Polyphenylene ether-based resin | 100 | 100 | 100 | 100 | 100 | 100 |
| | Polystyrene-based resin (high-impact polystyrene) | 80 | 80 | 80 | 80 | 40 | 130 |
| | Styrene·butadiene-based rubber (molecular weight: 100,000, styrene content: 30%) | – | – | – | – | – | – |
| | Styrene·butadiene-based rubber (molecular weight: 230,000, styrene content: 5%) | 13 | – | – | – | – | – |
| | Styrene·butadiene-based rubber (molecular weight: 230,000, styrene content: 30%) | – | – | 18 | – | – | – |
| | Styrene·butadiene-based rubbeer (molecular weight: 230,000, styrene content: 50%) | – | 13 | – | – | – | – |
| MFR after kneading (g/10 min) | | 3.02 | 4.15 | 3.55 | 6.20 | 2.92 | 10.00 |
| Moisture content (ppm) | | 190 | 190 | 210 | 220 | 200 | 230 |
| Izod impact strength (kJ/m$^2$) | | 7 | 12 | 18 | 8 | 6 | 13 |
| High-temperature creep characteristics (hr) | | 600 | 800 | 800 | 800 | >1000 | 400 |

Table 2

| | | Example 1 | Example 2 | Example 4 | Comparative Example 1 | Comparative Example 3 | Comparative Example 4 | Comparative Example 5 |
|---|---|---|---|---|---|---|---|---|
| Formulation (parts by weight) | Polyphenylene ether-based resin | 100 | 100 | 100 | 100 | 100 | 100 | 100 |
| | Polystyrene-based resin (high-impact polystyrene) | 80 | 80 | 110 | 80 | 130 | 10 | 80 |
| MFR after kneading (g/10 min) | | 3.62 | 1.57 | 4.50 | 6.20 | 10.00 | 0.50 | 3.62 |
| Moisture content (ppm) | | 200 | 190 | 210 | 220 | 230 | 200 | 380 |
| High-temperature creep characteristics (hr) | | >1000 | >1000 | 900 | 800 | 400 | - | >1000 |
| Extrusion moldability | | Moldable | Moldable | Moldable | Warping occurred | Warping occurred | Inmoldable | Moldable |
| Appearance of pipe | | Satisfactory appearance | Satisfactory appearance | Satisfactory appearance | Satisfactory appearance | Satisfactory appearance | Poor appearance | Poor appearance (silver streaks occurred) |

Table 3

| | | Vinyl chloride resin | Example 1 | Example 3 | Example 4 | Comparative Example 2 | Comparative Example 3 |
|---|---|---|---|---|---|---|---|
| Formulation (parts by weight) | Polyphenylene ether-based resin | | 100 | 100 | 100 | 100 | 100 |
| | Polystyrene-based resin (high-impact polystyrene) | | 80 | 60 | 110 | 40 | 130 |
| Measured value (mm) | Outer diameter | 70.03 | 70.10 | 70.11 | 70.17 | 69.95 | 70.19 |
| | Width | 133.01 | 133.02 | 133.01 | 133.02 | 132.74 | 133.14 |
| Mold shrinkage factor (%) | Outer diameter | 0.79 | 0.69 | 0.68 | 0.60 | 0.91 | 0.57 |
| | Width | 0.60 | 0.59 | 0.60 | 0.59 | 0.80 | 0.50 |
| Comparison (difference) with a vinyl chloride resin | | | Within an acceptable range (good) | Within an acceptable range (good) | Within an acceptable range (good) | Not within an acceptable range (poor) | Within an acceptable range (good) |

In the present invention, as conditions essential for a piping member, the Izod impact strength is 7 KJ/m or more (7 KJ/m or more is required so as to prevent easy breakage of the piping member) and high-temperature characteristics of 600 hours or more (has a lifetime of about 5 years in an atmosphere at 95°C under an internal pressure of 0.6 MPa). Regarding extrusion moldability, a piping member free from warping and appearance defects is rated as the lowest passable level.

When Example 1, Example 2 and Comparative Example 1 in Table 1 are compared, it is apparent that although the blending ratio of the polyphenylene ether-based resin to the polystyrene-based resin is the same, high-temperature creep characteristics vary, since the MFR after kneading is different. Although there is no difference in high-temperature creep characteristics between in the case of the MFR of Example 1 and Example 2, the value of high-temperature creep characteristics is reduced to about 4/5 of that in Example 1, since Comparative Example 1 exhibits a large MFR. The reason for this is that the molecular weight of the polyphenylene ether-based resin decreases when the MFR increases, while high-temperature characteristics deteriorate when the molecular weight is low.

As is apparent from Example 1, Example 3, Example 4, Comparative Example 2 and Comparative Example 3 in Table 1, high-temperature characteristics and physical properties such as impact strength vary with the proportion of the polystyrene-based resin relative to the polyphenylene ether-based resin. When the proportion of the polystyrene-based resin relative to 100 parts by mass of the polyphenylene ether-based resin is less than 80 parts by mass of Example 1, both high-temperature creep characteristics and impact strength do not vary in the case of 60 parts by mass of Example 3. In the case of 40 parts by mass of Comparative Example 2, high-temperature creep characteristics do not vary, but the impact strength decreases, resulting in an unsatisfactory piping member. When the proportion of the polystyrene-based resin relative to 100 parts by mass of the polyphenylene ether-based resin is more than 80 parts by mass of Example 1, although the impact strength is improved in the case of 110 parts by mass of Example 4, high-temperature creep characteristics deteriorate slightly. In the case of 130 parts by mass of Comparative Example 3, the impact strength is further improved and high-temperature characteristics deteriorate, resulting in an unsatisfactory piping member. As is apparent from the above description, well-balanced physical properties such as high-temperature characteristics and impact strength necessary for a piping member can be obtained when the polystyrene-based resin is blended in an amount within a range from 50 to 120 parts by mass relative to 100 parts by mass of the polyphenylene ether-based resin.

When Example 1 is compared with Example 5, the impact strength can be improved while maintaining high-temperature characteristics by blending an appropriate amount of the styrene·butadiene-based rubber. As is apparent from a comparison of Example 5 to Example 9, optimum conditions of the styrene·butadiene-based rubber are determined by the weight average molecular weight of styrene, the styrene content and the amount of the styrene·butadiene-based rubber relative to 100 parts by mass of the polyphenylene ether-based resin. Regarding the weight average molecular weight of styrene, since the weight average molecular weight of the styrene·butadiene-based rubber of Example 6 is small at 100,000 compared with the weight average molecular weight of 230,000 of the styrene·butadiene-based rubber of Example 5, high-temperature creep characteristics of Example 6 deteriorate. Regarding the styrene content, since the styrene content of Example 7 is small at 5% compared with 30% of the styrene content of Example 5, compatibility with the polyphenylene ether-based resin deteriorates and high-temperature creep characteristics deteriorate, and also the impact strength is not improved. Example 8 has a large styrene content of 50% and thus compatibility with polyphenylene ether-based resin is improved and the impact strength is improved, but high-temperature characteristics deteriorate slightly. Regarding the amount of the styrene·butadiene-based rubber relative to 100 parts by mass of the polyphenylene ether-based resin, when the amount in Example 9 increases to 18 parts by mass compared with 13 parts by mass in Example 5, the impact strength is improved, but high-temperature characteristics deteriorate. As is apparent from the above description, the impact strength can be improved while maintaining high-temperature creep characteristics by blending 1 to 15 parts by mass of a styrene·butadiene-based rubber having a styrene content of 10 to 40% and a weight average molecular weight of 200,000 or more relative to 100 parts by mass of the polyphenylene ether-based resin.

As is apparent from Table 2, there is a correlation between high-temperature creep characteristics and moldability due to a difference in the MFR after kneading. When the MFR deviates from a range of 1.0 to 5.0 g/10 min, it is impossible to satisfy both high-temperature creep characteristics and moldability. In Comparative Example 4, a pipe could not be molded, since the resin composition could not flow because of too small a value of MFR. In Comparative Example 3, a satisfactory pipe could not be obtained, since thickness deviation and warping of the pipe occurred because of too large a value of MFR. In Comparative Example 1, a satisfactory pipe could not be obtained, since slight thickness deviation and slight warping occurred in the pipe. Therefore, it is necessary for the MFR of the resin composition to be from 1.0 to 5.0 g/10 min.

As is apparent from Table 2, there is no difference in physical properties between Example 1 and Comparative Example 5. However, a large moisture content may cause silver streaks on the surface of the molded pipe. Therefore, when the moisture content before molding of the resin composition is less than 250 ppm, molding for achieving satisfactory appearance can be conducted.

As is apparent from Table 3, the mold shrinkage factor varies with the proportion of the polystyrene-based resin relative to 100 parts by mass of the polyphenylene ether-based resin. Since the mold shrinkage factors in Example 1, Example 3, Example 4 and Comparative Example 3 are within a range from 0.5 to 0.8% and are within the permissible deviation of the basic dimensions, a molded article equivalent to the molded article made of a vinyl chloride resin can be obtained. Therefore, the same mold as for the vinyl chloride resin can be used. When the amount of the polystyrene-based resin is from 50 to 120 parts by mass relative to 100 parts by mass of the polyphenylene ether-based resin, it is possible to adjust the mold shrinkage factor within almost the same range as that in the case of vinyl chloride resin.

As described above, the piping member made of a polyphenylene ether-based resin composition of the present invention is excellent in the balance between high-temperature characteristics and impact strength, and also can maintain fluidity upon molding, and thus a satisfactory molded article can be obtained. Therefore, the piping member can be used over a long period even when a chemical solution of acid and alkali within a high temperature range (60 to 95°C) flows through it, and also can be used at a temperature of about 100°C. Also, by adding a styrene·butadiene-based rubber, the impact strength can be improved without deterioration of high-temperature characteristics.

While the pipe produced by extrusion molding of a polyphenylene ether-based resin composition is used in the present example, the same effect is obtained in a multi-layered pipe produced by extrusion molding, and other piping members such as joints and flanges produced by injection molding.

EFFECTS OF THE INVENTION

The piping member produced by using the polyphenylene ether-based resin composition of the present invention has the following excellent characteristics.

(1) A piping member having a satisfactory balance between high-temperature creep characteristics and impact strength can be obtained by using 50 to 120 parts by mass of a polystyrene-based resin relative to 100 parts by mass of a polyphenylene ether-based resin as essential components.

(2) Limitation of the MFR of a polyphenylene ether-based resin composition within a range from 1.0 to 5.0 g/10 min enables security of fluidity to be maintained upon molding, and thus a satisfactory molded article free from warping can be obtained and high-temperature characteristics can be retained.

(3) When the mold shrinkage factor is from 0.5 to 0.8%, the same facilities as for the production of a vinyl chloride resin can be used.

(4) A lifetime of 10 years can be ensured in a state wherein an internal pressure of 0.6 MPa is applied in an atmosphere at 95°C by leaving it to stand in an atmosphere at 95°C under an applied load of 5.0 MPa for 1,000 hours or more, and thus making it possible to use it as a piping member over a long period.

(5) By adjusting the moisture content before molding to less than 250 ppm, appearance defects and bubbles upon molding can be prevented, particularly in a thick-wall piping member.

(6) By blending with a styrene·butadiene-based rubber having a weight average molecular weight of 200,000 or more, impact strength can be increased without causing deterioration of high-temperature characteristics.

**Claims**

1. A piping member molded from a resin composition comprising 50 to 120 parts by mass of a polystyrene-based resin relative to 100 parts by mass of a polyphenylene ether-based resin as essential components, and having a melt flow rate after kneading of 1.0 to 5.0 g/10 min.

2. The piping member according to claim 1, wherein a mold shrinkage factor is from 0.5 to 0.8%.

3. A piping member according to claim 1 or 2, **characterized in that** a time to breakage is 1,000 hours or more in a high-temperature creep characteristics test when molding is carried out in an atmosphere at 95°C under an applied tensile load of 5.0 MPa.

4. The piping member according to any one of claims 1 to 3, wherein the moisture content of the kneaded resin composition before molding is less than 250 ppm.

5. The piping member according to any one of claims 1 to 4, in which is further blended a styrene·butadiene-based rubber having a styrene content of 10 to 40% and a weight average molecular weight of 200,000 or more in an amount of 1 to 15 parts by mass relative to 100 parts by mass of the polyphenylene ether-based resin.

6. The piping member according to any one of claims 1 to 5, wherein the piping member is a tube or a joint, and an outer diameter D and a wall thickness t of the tube or the joint satisfy the following relationships:

   1) D > 48 mm, and
   2) (1/35)D < t < (1/9)D.

<table>
<tr><td colspan="2" align="center">**INTERNATIONAL SEARCH REPORT**</td><td colspan="2">International application No.<br>PCT/JP2008/059847</td></tr>
</table>

| A. CLASSIFICATION OF SUBJECT MATTER |
|---|
| *C08L71/12*(2006.01)i, *C08L9/06*(2006.01)i, *C08L25/04*(2006.01)i, *F16L9/12*<br>(2006.01)i |
| According to International Patent Classification (IPC) or to both national classification and IPC |

| B. FIELDS SEARCHED |
|---|
| Minimum documentation searched (classification system followed by classification symbols)<br>C08L1/00-101/14, F16L9/00-11/18 |
| Documentation searched other than minimum documentation to the extent that such documents are included in the fields searched<br>   Jitsuyo Shinan Koho      1922-1996   Jitsuyo Shinan Toroku Koho   1996-2008<br>   Kokai Jitsuyo Shinan Koho   1971-2008   Toroku Jitsuyo Shinan Koho   1994-2008 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2003-49065 A (GE Plastics Japan Ltd.),<br>21 February, 2003 (21.02.03),<br>Claim 8; Par. Nos. [0065] to [0073]<br>& US 2003/0119953 A1 | 1<br>2-6 |
| A | JP 8-238717 A (Sumitomo Metal Industries,<br>Ltd.),<br>17 September, 1996 (17.09.96),<br>Full text<br>(Family: none) | 1-6 |
| A | JP 2005-239784 A (Asahi Kasei Chemicals Corp.),<br>08 September, 2005 (08.09.05),<br>Par. Nos. [0063] to [0068]<br>(Family: none) | 1-6 |

| ☒   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>   04 August, 2008 (04.08.08) | Date of mailing of the international search report<br>   12 August, 2008 (12.08.08) |
|---|---|
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/059847

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-185064 A  (GE Plastics Japan Ltd.), 03 July, 2003 (03.07.03), Full text & US 2003/0130421 A1 | 1-6 |
| A | JP 2003-14190 A  (GE Plastics Japan Ltd.), 15 January, 2003 (15.01.03), Full text & US 2003/0049402 A1    & WO 2003/004573 A1 & CN 1543490 A | 1-6 |
| A | WO 2005/108051 A1  (Daikin Industries, Ltd.), 17 November, 2005 (17.11.05), Par. Nos. [0095], [0097] & US 2007/0166497 A1    & EP 1741548 A1 & KR 10-2006-0134205 A   & CN 1942305 A | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003074754 A

- JP 2005239784 A